# EUROPEAN PATENT APPLICATION

(11) **EP 0 618 121 A1**
(43) Date of publication of application: **05.10.1994**
(21) Application number: 94830147.8
(22) Date of filing: 29.03.1994
(51) Int. Cl.: B60T 17/22, B60S 5/00

(54) **Device for the automatic remote operating of the pedals of a motor vehicle**

(30) Priority: 31.03.1993 IT MI930634
(71) Applicant: Cordioli, Sergio, Milano I-20132 (IT)
(72) Inventor: Cordioli, Sergio, Milano I-20132 (IT)
(74) Representative: Adorno, Silvano

(57) **Abstract**

A device for the automatic remote operating of the pedals of a motor vehicle includes a frame (11, 12, 13, 14, 15) which houses and guides a pair of slides (20, 21) axially sliding under the action of a power unit (25) mounted on said frame, a fork-like member (60) suitable to hook to a pedal of a motor vehicle being mounted on one of said slides (20), and a member (36) suitable to abut against the driver's seat being mounted on the other slide (21), said power unit (25) including a unit for the remote control thereof.

## Description

The present invention concerns devices for analysing and tuning motor vehicles, and in particular a remotely controlled device for pushing and releasing the pedals of a motor vehicle.

It is known that said pedals are provided with an automatic mechanism to go back to the rest position for obvious safety reasons. However, this feature is a drawback during repairings or adjustments of the members controlled by the pedals. In this case, in fact, it is necessary to repeatedly push and release the pedals.

Presently, the operator carrying out the adjustment requires the help of an assistant which performs this pushing and releasing operation on the pedals according to the instructions of the operator, which can even be under the vehicle.

The serious drawback implicit in this method is apparent, since it is necessary to employ double labour, with all the cost problems related thereto. Moreover, problems may arise concerning the synchronization between the operator's actions and his assistant's ones.

The object of the present invention is to provide a remotely controlled device suitable to replace the operator's assistant, so that the operator himself performs the required actions on the pedals with no need to move from his working position.

This object is achieved by means of a device having the characteristics cited in claim 1.

Therefore, the device according to the present invention permits the advantageous replacement of the extra labour required in conventional adjustment operations, thus allowing a single operator to carry out the operation with a considerable saving of time.

This and other advantages and characteristics of the device according to the present invention will be apparent to those skilled in the art from the following detailed description of a preferred embodiment thereof referring to the annexed drawings wherein:
Fig.1 is a schematic side view of a device according to the invention applied to a car;
Fig.2 is a schematic side view of the device in an almost completely closed position;
Fig.3 is a schematic plan view of the device in an almost completely closed position;
Fig.4 is a cross-sectional view along line A-A of fig.3;
Fig.5 is an enlarged longitudinal sectional view along line B-B of fig.3; and
Fig.6 is a simplified plan view of the device in an extended position.

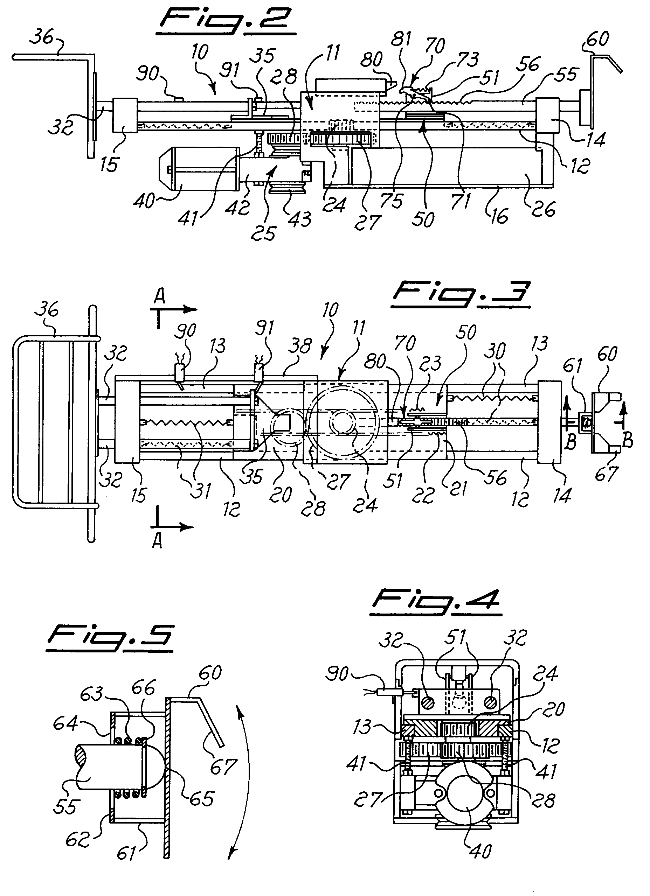

Referring to figs.2, 3 and 4, there is seen that a device according to the present invention, globally indicated by 10, includes a frame formed by a central structure 11 connected through a pair of parallel rods 12,13 to a front head 14 and a rear head 15. A plate 16 supporting a battery 26 for feeding the device is arranged between structure 11 and head 14 at the bottom thereof. Obviously, the device could be fed by connecting it to the power mains as well. A power unit 25 including an electric motor 40, a reducer 42 and a clutch 43 is fixed below rods 12 and 13 by means of a pair of threaded columns 41. The function of clutch 43 is obviously to prevent damages to the device and/or to the vehicle in case motor 40 meets an excessive resistance during the operation of the device.

A pinion 24 and a toothed wheel 27 are keyed on a vertical spindle rotating in an almost central position on structure 11. The toothed wheel 27 meshes with another toothed wheel 28 having a smaller diameter which is keyed on the exit spindle of reducer 42. A pair of slides 20, 21 are slidably inserted on rods 12 and 13, respectively. Each slide 20,21 is provided with a rack 22,23, respectively, which meshes with pinion 24.

On top of slide 20 an L-shaped bracket 35 is secured to which an end of a pair of parallel rods 32 is fixed, said rods being slidably inserted in proper seats formed in the rear head 15. At the other end of rods 32 there is fixed a bracket 36 shaped as an inverted L, of much greater size than bracket 35, facing backwards.

On top of slide 21 a structure 50 is secured through whose sides 51 an horizontal pin 75 supporting a central ratchet 70 passes. An extension bar 55 is slidably inserted through said structure 50 and in a proper seat formed in the front head 14. The upper part of bar 55 has a saw-tooth profile 56 facing backwards, so as to form a ratchet gear together with ratchet 70 which is provided with a front tooth 71. Said tooth 71 is forced downwards by the action of a spring 73 secured to structure 50. When the device closes completely, the rear head 81 of ratchet 70 abuts against a corresponding wedge 80 projecting from structure 11. Said wedge 80 pushes down head 81 and overcomes the action of spring 73, thus raising tooth 71 from profile 56. In this way, bar 55 freely slides and thus does not pull the pedal more backward than its resting position. This also allows an easy mounting of the device on the vehicle regardless of the distance between seat and pedals.

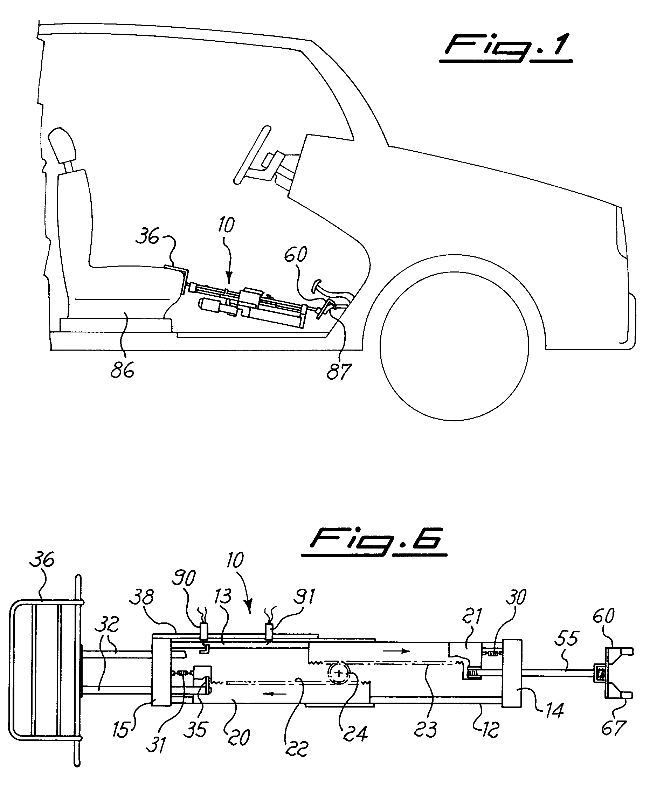

A fork-like hook 60 suitable to hook to a pedal 87 of a motor vehicle (see fig.1) is mounted at the front end of bar 55. Referring to fig.5, there is seen that the connection between hook 60 and bar 55 consists of an articulated joint. Said joint is formed by a C-shaped section 61 which is integral with the rear of hook 60 and by the hemispherical end 65 of bar 55. The latter enters section 61 through a vertical slot 64 formed in the web 62 of section 61. The end of bar 55 is provided with a raised ring 66 located at the base of hemisphere 65, and a spring 63 is placed between web 62 of section 61 and ring 66. In this way, hook 60 can vary its inclination in the vertical plane within a wide range, thanks to the play allowed by slot 64. Moreover, it can rotate around the longitudinal axis of bar 55. Therefore, the arms 67 of the fork can grip pedals oriented anyhow.

As shown in fig.1, device 10 is inserted on a car with bracket 36 abutting against the driver's seat 86, and the fork-like hook 60 engages the pedal 87 relevant to the adjustment to be made (clutch, brake, accelerator). The power unit 25 is remotely controlled through a suitable connection such as, for example, a wire or a radio control. In this latter instance, the device obviously includes a radio receiving unit (not shown). Under the action of motor 40, pinion 24 rotates in the clockwise direction to extend device 10 (see fig.6), and in the opposite direction to close it.

The adjustment of the stroke of slides 20,21 driven by the action of pinion 24 on the respective racks 22,23 is carried out by means of a pair of limit switches 90, 91 which can slide on a guide 38 mounted parallel to rods 32 between structure 11 and head 15. Said switches 90, 91 are on the path of the upper part of bracket 35 fixed on slide 20.

Two pairs of springs 30 and 31 are respectively positioned between slide 20 and head 15, and between slide 21 and head 14. These springs 30, 31 are under tension when the device is in the closed position (see figs.2, 3), and therefore cooperate with the power unit 25 during the extension stroke. Thanks to their presence, the power required to operate the device during the closing stroke is nearly equal to that required to operate it during the extension stroke. In this way, it is possible to size the power unit 25 at a power about half of that required to push the pedal.

## Claims

1. A device for the automatic remote operating of the pedals of a motor vehicle, characterized in that it includes a frame (11, 12, 13, 14, 15) which houses and guides a pair of slides (20,21) axially sliding under the action of a power unit (25) mounted on said frame, a member (60) suitable to hook to a pedal of a motor vehicle being mounted on one of said slides (20), and a member (36) suitable to abut against the driver's seat being mounted on the other slide (21), said power unit (25) including a unit for the remote control thereof.

2. A device according to claim 1, characterized in that the power unit (25) includes an electric motor (40), a reducer (42) and a clutch (43).

3. A device according to claim 1 or 2, characterized in that the power unit (25) is fed by a battery (26) supported by a plate (16) secured to the device frame.

4. A device according to one of the claims from 1 to 3, characterized in that the power unit (25) drives a pinion (24) which meshes with a pair of racks (22, 23) each one being integral with one of the slides (20,21).

5. A device according to one of the claims from 1 to 4, characterized in that the member (60) suitable to hook to a pedal consists of a fork provide with a pair of arms (67).

6. A device according to one of the claims from 1 to 5, characterized in that the member (36) suitable to abut against the seat consists of a bracket shaped as an inverted L and facing backwards.

7. A device according to one of the claims from 1 to 6, characterized in that at least one between the hooking member (60) and the abutting member (36) is mounted on the relevant slide through an extension bar (55) whose position with respect to said slide is preferably fixed by means of a ratchet gear formed by a ratchet (70), mounted on the slide, which engages a saw-tooth profile (56) formed on the upper portion of said bar (55).

8. A device according to one of the claims from 1 to 7, characterized in that the hooking member (60) is connected to the bar (55) through an articulated joint consisting of a C-shaped section (61) which is integral with the rear of the member (60) and of the hemispherical end (65) of the bar (55), which enters section (61) through a vertical slot (64) formed in the web (62) of the section (61), the end of the bar (55) being provided with a raised ring (66) located at the base of the hemisphere (65), and a spring (63) being placed between the web (62) of the section (61) and the ring (66).

9. A device according to one of the claims from 1 to 8, characterized in that the stroke of the slides (20,21) is adjusted through a pair of limit switches (90,91) sliding on a guide (38) parallel to said slides (20, 21) and placed on the path of a bracket (35) integral with one of the slides (20).

10. A device according to one of the claims from 1 to 9, characterized in that it includes elastic members (30, 31) interposed between the frame (11, 14, 15) and the slides (20, 21) so as to oppose the closing stroke of the device and to cooperate during the extension stroke thereof.

11. A device according to one of the claims from 1 to 10, characterized in that the unit for the remote controlling of the power unit (25) consists of a radio receiver.
